**Europäisches Patentamt**

**European Patent Office**

**Office européen des brevets**

(19)

(11) Veröffentlichungsnummer : **0 126 862 B2**

(12) # NEUE EUROPÄISCHE PATENTSCHRIFT

(45) Veröffentlichungstag der neuen Patentschrift :
**12.08.92 Patentblatt 92/33**

(51) Int. Cl.⁵ : **F16G 13/16, H02G 11/00, F16L 3/00**

(21) Anmeldenummer : **84102288.2**

(22) Anmeldetag : **03.03.84**

(54) **Energieführungskette.**

(30) Priorität : **20.05.83 DE 3318365**

(43) Veröffentlichungstag der Anmeldung :
**05.12.84 Patentblatt 84/49**

(45) Bekanntmachung des Hinweises auf die
Patenterteilung :
**22.04.87 Patentblatt 87/17**

(45) Bekanntmachung des Hinweises auf die
Entscheidung über den Einspruch :
**12.08.92 Patentblatt 92/33**

(84) Benannte Vertragsstaaten :
**AT CH DE FR GB IT LI NL SE**

(56) Entgegenhaltungen :
**DE-A- 1 932 428**

(56) Entgegenhaltungen :
**DE-U- 8 213 664**
**FR-A- 2 206 824**
**US-A- 3 197 954**
**US-A- 3 473 769**
**US-A- 3 779 003**

(73) Patentinhaber : **Kabelschlepp Gesellschaft mit
beschränkter Haftung
Marienborner Strasse 75
W-5900 Siegen 1 (DE)**

(72) Erfinder : **Moritz, Werner
Wetzlarer Strasse 122
W-5900 Siegen 1 (DE)**

(74) Vertreter : **Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11 (DE)**

EP 0 126 862 B2

## Beschreibung

Gegenstand der Erfindung ist eine Energieführungskette aus Kunststoff zum Führen von Energieleitern, insbesondere Kabel oder Schläuche, von einem festen Anschluss zu einem beweglichen Verbraucher, bestehend aus einer Vielzahl von Kettengliedern, deren gegenseitiger Schwenkwinkel begrenzt ist und die aus einem einteilig und formstabil ausgebildeten U-förmigen Aufnahmeteil mit einer die Aussenlaschen einteilig miteinander verbindenden Traverse gebildet sind, während eine weitere Traverse aus einem getrennten Schliessbügel besteht, der die Aussenlaschen miteinander verbindet und der an der einen Aussenlasche mit einem elastischen Haken verriegelbar ist.

Derartige Energieführungsketten sind beispielsweise aus der US-A-3 779 003 bekannt. Bei diesen Energieführungsketten ist der getrennte Schliessbügel an beiden Aussenlaschen mit elastischen Haken verriegelt, die von aussen in entsprechende Ausnehmungen der Aussenlaschen eines Aufnahmeteiles eingehakt werden. Deshalb können sich die Aussenlaschen des Aufnahmeteiles beim bestimmungsgemässen Gebrauch der Energieführungsketten nach innen bewegen, so dass sich ein Schliessbügel unbeabsichtigt lösen kann.

Davon ausgehend liegt der Erfindung die Aufgabe zugrunde, eine einfach handhabbare Energieführungskette aus Kunststoff zu schaffen, bei der die Aussenlaschen des Aufnahmeteiles sich nach der Montage des Schliessbügels nicht mehr relativ zueinander bewegen können, so dass ein unbeabsichtigtes Öffnen der Schliessbügel ausgeschlossen ist.

Zur Lösung dieser Aufgabe wird vorgeschlagen, dass der Schliessbügel an der anderen Aussenlasche mit einem lösbaren Scharnier angelenkt und dass in den Schliessbügel am Fuss des Hakens eine Nut eingeformt ist, in welche die freie Kante der Aussenlasche eingreift.

Bei einer praktischen Ausführungsform kann das Scharnier zwischen dem Aufnahmeteil und dem Schliessbügel aus einer in die freie Kante einer Aussenlasche freiliegend eingeformten Gelenkachse mit abgeflachtem Querschnitt und abgerundeten Schmalseiten und aus einer in das Ende des Schliessbügels eingeformten, mit Hinterschneidungen versehenen, angeschnittenen Ausnehmung bestehen. Diese Konstruktion des Scharnieres ermöglicht es, den Aufnahmeteil und den Schliessbügel getrennt herzustellen und den Schliessbügel nach dem Aufstecken auf die Gelenkachse und Verschwenken in Richtung auf die gegenüberliegende Aussenlasche kraft- und formschlüssig mit der Gelenkachse zu verspannen.

Die Kettenglieder einer erfindungsgemäss ausgebildeten Energieführungskette bestehen ebenfalls aus nur zwei Einzelteilen, die in getrennten Arbeitsgängen aus Kunststoff hergestellt werden können. Beim bestimmungsgemässen Gebrauch besteht der herausragende Vorteil darin, dass der Schliessbügel sich nicht aus seiner montierten Lage bewegen und unbeabsichtigt öffnen kann, weil die Aussenlaschen jedes Kettengliedes einerseits durch das Scharnier und andererseits durch die Nut über den dazwischenliegenden Bereich des Schliessbügels in einem definierten Abstand voneinander gehalten und sich nicht mehr relativ zueinander bewegen können.

Weitere Einzelheiten und Vorteile des Gegenstandes der Erfindung ergeben sich aus der nachfolgenden Beschreibung, der zugehörigen Zeichnungen, in denen ein bevorzugtes Ausführungsbeispiel der Erfindung dargestellt worden ist. In den Zeichnungen zeigen:

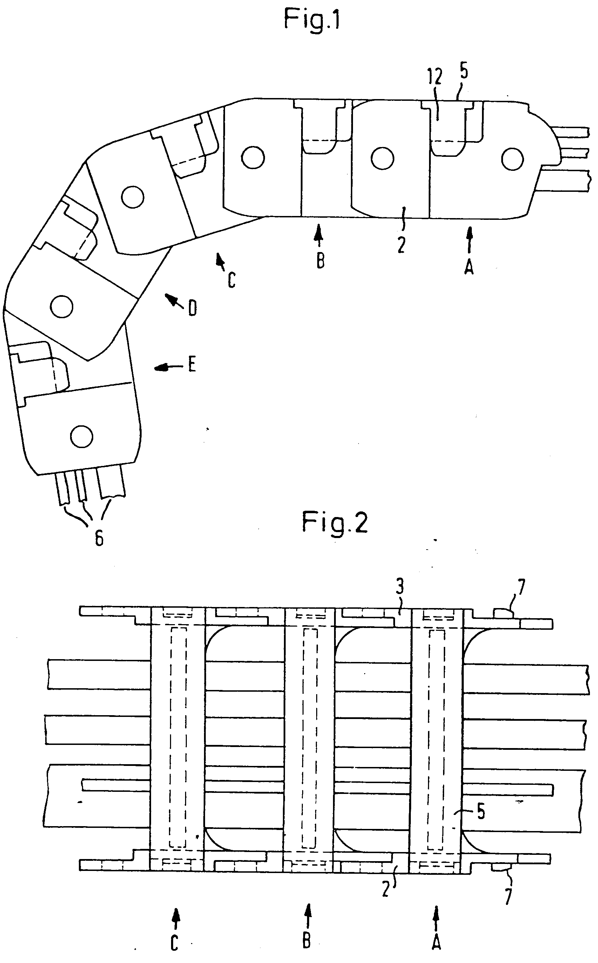

Fig. 1 einen Abschnitt einer Energieführungskette mit mehreren gegeneinander abgewinkelten Kettengliedern in Seitenansicht;

Fig. 2 einen Abschnitt einer Energieführungskette in Draufsicht;

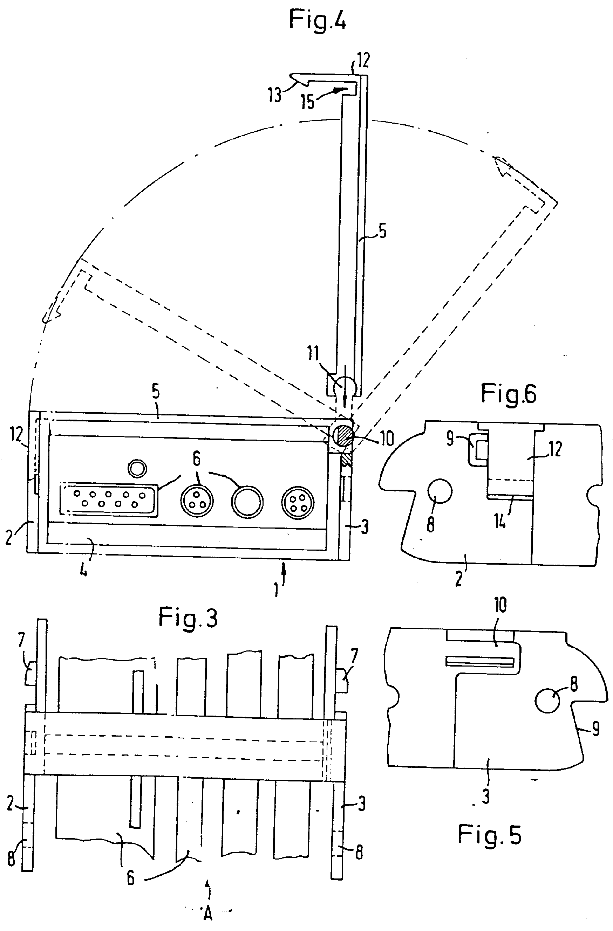

Fig. 3 ein Kettenglied in vergrösserter Darstellung in Draufsicht;

Fig. 4 dasselbe Kettenglied gem. Fig. 3 mit geschlossenem und geöffnetem Schliessbügel in Richtung der Energieleiter gesehen;

Fig. 5 das Kettenglied gem. Fig. 3 mit geschlossenem Schliessbügel von seiner Scharnierseite her gesehen;

Fig. 6 dasselbe Kettenglied gem. Fig. 3 von seiner Schliesseite her gesehen.

Jedes Kettenglied A, B, C, D, E, besteht aus einem U-förmigen Aufnahmeteil 1 mit zwei Aussenlaschen 2, 3 und einer diese einteilig miteinander verbindenden Traverse 4 sowie einem Schliessbügel 5. Diese Konstruktionsteile umranden eine Öffnung zum Einlegen von Energieleitungen 6. Die Enden der Aussenlaschen 2, 3 sind elastisch nachgiebig ausgebildet, so dass die einzelnen Kettenglieder zu einer Gelenkkette zusammengeschoben werden können, wobei an ihrer Vorderseite angeschrägte Gelenkzapfen 7 in Gelenkbohrungen 8 einrasten.

Der gegenseitige Schwenkwinkel zwischen zwei Kettengliedern A bis B wird durch Anschläge 9 begrenzt.

In die freie Kante der Aussenlasche 3 ist etwa in der Mitte eine freiliegende Gelenkachse 10 eingeformt, die einen abgeflachten Querschnitt und abgerundete Schmalseiten besitzt. Mit dieser Gelenkachse 10 wirkt eine in das Ende des Schliessbügels 5 eingeformte, mit Hinterscheidung versehene und angeschnittene Ausnehmung 11 zusammen. Die lichte Weite der angeschnittenen Öffnung in der Ausnehmung 11 ist gerade so gross, dass der Schliessbügel 5 in seiner geöffneten Lage auf die Gelenkachse 10 aufgeschoben werden kann. Wenn der aufgesteckte Schliessbügel 5 in Richtung auf die gegenüberliegende Aussenlasche 2 in seine Schliesslage verschwenktwird, bildet die Gelenkachse 10 in Verbindung mit der Ausnehmung 11 ein kraft- und formschlüssiges Scharnier, mit dem der Schliessbügel 5 am Aufnahmeteil 1 angelenkt ist.

An seinem freien Ende besitzt der Schliessbügel 5 einen Haken 12 mit einer Nase 13, die in einer Ausnehmung 14 an der Aussenlasche 2 einrasten kann. Am Fuss des Hakens 12 ist eine Nut 15 in den Schliessbügel 5 eingeformt, in welcher die freie obere Kante der Aussenlasche 12 eingreifen kann, so dass eine Relativbewegung zwischen den Aussenlaschen 2 und 3 bei eingerastetem Schliessbügel 5 ausgeschlossen ist.

Bezugszeichenliste

1 Aufnahmeteil
2 Aussenlasche
3 Aussenlasche
4 Traverse
5 Schliessbügel
6 Energieleitung
7 Gelenkzapfen
8 Gelenkbohrung
9 Anschlag
10 Gelenkachse
11 Ausnehmung
12 Haken
13 Nase
14 Ausnehmung
15 Nut
A bis E Kettenglied

**Patentansprüche**

1. Energieführungskette aus Kunststoff zum Führen von Energieleitern insbesondere Kabel oder Schläuche, von einem festen Anschluss zu einem beweglichen Verbraucher, bestehend aus einer Vielzahl von Kettengliedern (A, B, C, D, E), deren gegenseitiger Schwenkwinkel begrenzt ist und die aus einem einteilig und formstabil ausgebildeten, U-förmigen Aufnahmeteil (1) mit einer die Aussenlaschen (2, 3) einteilig miteinander verbindenden Traverse (4) gebildet sind, während eine weitere Traverse aus einem getrennten Schliessbügel (5) besteht, der die Aussenlaschen (2, 3) miteinander verbindet und der an der einen Aussenlasche (2) mit einem elastischen Haken (12) verriegelbar ist, dadurch gekennzeichnet, dass der Schliessbügel (5) an der anderen Aussenlasche (3) mit einem lösbaren Scharnier angelenkt und dass in den Schliessbügel (5) am Fuss des Hakens (12) eine Nut (15) eingeformt ist, in welche die freie Kante der Aussenlasche (2) eingreift.

2. Energieführungskette nach Anspruch 1, dadurch gekennzeichnet, dass das Scharnier aus einer in die freie Kante einer Aussenlasche (3) freiliegend eingeformten Gelenkachse (10) mit abgeflachtem Querschnitt und abgerundeten Schmalseiten und aus einer in das Ende des Schliessbügels (5) eingeformten, mit Hinterschneidungen versehenen, angeschnittenen Ausnehmung (11) besteht.

3. Energieführungskette nach den Ansprüchen 1 und 2, dadurch gekennzeichnet, dass der Schliessbügel (5) nach dem Aufstecken auf die Gelenkachse (10) und Verschwenken in Richtung auf die gegenüberliegende Aussenlasche (2) kraft- und formschlüssig mit der Gelenkachse (10) verspannt ist.

**Claims**

1. Power supply chain of plastic for guiding power conductors, particularly cables or flexible tubes, from a fixed connection to a mobile consumer, consisting of a plurality of chain links (A, B, C, D, E), the mutual pivoting angle of which is limited and which are formed of a one-piece and rigidly formed U-shaped receiving part (1) with a crossmember (4) connecting the external plates (2,3) together as a single unit, while a further crossmember consists of a separate closure clip (5) which connects the external plates (2,3) together and which is lockable on the one external plate (2) by means of an elastic hook (12), characterised in that the closure clip (5) is hinged on the external plate (3) by means of a detachable hinge, and in that a groove (15) is formed in the closure clip (5) at the base of the hook (12), into which groove the free edge of the external plate (2) engages.

2. Power supply chain according to claim 1, characterised in that the hinge consists of a joint axle (10) with flattend section and rounded-off narrow sides formed in and exposed at the free edge of an external plate (3), and of a cut-out recess (11) formed in the end of the closure clip (5) and provided with rear cuts.

3. Power supply chain according to claims 1 and 2, characterised in that the closure clip (5) is tensioned in frictional connection and in positive locking with the joint axle (10) after fitting to the joint axle (10) and pivoting in the direction of the opposite external plate (2).

## Revendications

1. Chaîne de guidage de conducteurs d'énergie en plastique pour le guidage de conducteurs d'énergie, notamment de câbles ou de conduites souples, à partir d'un raccord fixe vers un ensemble utilisateur mobile, constituée d'une multiplicité de maillons de chaîne (A, B, C, D, E) dont les angles de rotation réciproques sont limités et qui sont formés d'une pièce de réception (1) en un seul élément rigide et en forme de U avec une entretoise (4) reliant solidairement entre elles des attaches extérieures (2,3), tandis qu'une autre entretoise est constituée d'un étrier de fermeture (5) reliant entre elles les attaches extérieures (2,3) et pouvant être verrouillé sur une attache extérieure (2) par une grille élastique (12), caractérisée en ce que l'étrier de fermeture (5) est articulé sur l'autre attache extérieure (3) à l'aide d'une charnière démontable et en ce qu'une rainure (15) est formée dans l'étrier de fermeture (5) à la base de la griffe (12), le bord libre de l'attache extérieure (2) s'engageant dans cette rainure.

2. Chaîne de guidage de conducteurs d'énergie selon la revendication 1, caractérisée en ce que la charnière se compose d'un axe d'articulation (10) formé en porte-à-faux dans le bord libre d'une attache extérieure (3), avec une section à méplat et des petits côtés arrondis, et d'un évidement (11) formé dans l'extrémité de l'étrier de fermeture (5) et taillé en dépouille.

3. Chaîne de guidage de conducteurs d'énergie selon les revendications 1 et 2, caractérisée en ce que l'étrier de fermeture (5) est, après engagement sur l'axe d'articulation (10) et pivotement en direction de l'attache extérieure opposée (2), serré en liaison par force et par forme sur l'axe de pivotement (10).

## Fig.1

## Fig.2

Fig.4

Fig.6

Fig.3

Fig.5